# EUROPEAN PATENT SPECIFICATION

(11) **EP 0 671 257 B1**
(45) Date of publication and mention of the grant of the patent: **11.11.1998**
(21) Application number: 95301624.3
(22) Date of filing: 13.03.1995
(51) Int. Cl.: B32B 21/08, E04C 2/24

(54) **Composite board**
Verbundplatte
Panneau composé

(30) Priority: 11.03.1994 JP 40275/94; 11.03.1994 JP 40279/94; 18.03.1994 JP 48110/94
(43) Date of publication of application: 13.09.1995
(73) Proprietor: MITSUI CHEMICALS, INC., Tokyo (JP)
(72) Inventor: Katsuta, Ryutaro, 343 Mitsui Toatsu, Yokohama-shi, Kanagawa-ken 244 (JP); Umino, Hiroshi, Odawara-shi, Kanagawa-ken 256 (JP); Kishi, Satoru, Yokohama-shi, Kanagawa-ken 244 (JP); Tomimoto, Hiroaki, Kamakura-shi, Kanagawa-ken 247 (JP); Tanabe, Hiroshi, Kamakura-shi, Kanagawa-ken 247 (JP); Aihara, Shin, Yokohama-shi, Kanagawa-ken 244 (JP); Miyasaka, Yoshiharu, Fujisawa-shi, Kanagawa-ken 251 (JP)
(74) Representative: Nicholls, Kathryn Margaret

(56) References cited:
- DE-A- 4 110 640
- GB-A- 1 423 046
- GB-A- 2 053 696
- US-A- 4 416 929

## Description

The present invention relates to wood material, and more specifically relates to composite boards reinforced with fiber-reinforced resin, especially high-strength composite boards used in civil engineering construction and general industry.

Wood boards made from wood material include plywood board, particle board and fiber board, and are widely used in civil engineering construction work and general industry.

Plywood boards can be made by taking thick lumber of tropical tree and slicing it into thin slices with a veneer lathe. A plurality of these slices are then stacked and glued together so that their fibers are arranged perpendicular to one another. Another method for making the board is to mix saw dust into glue and have it harden into the shape of a board. Thin slices, as described above, are then glued onto the front and back of this. Composite boards of theme types are used in large quantities in civil engineering constructions and the like. However, manufacture of these boards requires a lot of large trees. It takes many years for a tree to grow to an adequate size, even in tropical regions, and cutting down these trees without adequate preparation can destroy a forest. With the recent concern for global warming and desertification, it has become necessary to reduce wood consumption and preserve forests.

Boards made of aluminum and thermoplastic resin have been proposed in response to this situation, but these are heavy and are difficult to process at construction sites. Furthermore, it is difficult to recycle these when they have become industrial waste, so there are problems in disposal as well.

There are also composition boards beside plywood boards. These include particle boards, fiber boards, wood cement boards, and boards made from wood chips mixed with paper pulp, fiber, and particles of waste material.

In particle boards, wood from miscellaneous small trees, scraps from construction work, waste material, and defective wood are processed into chips. A synthetic resin bonding agent is added and a board is formed using hot compression molding .

In fiber boards, a synthetic resin bonding agent is mixed into plant fibers and hot compression molding is performed. Because there is a uniform distribution of wood fibers, there is no directionality in strength or expansion and compression rates. This gives it the advantage of not splitting or warping during use.

In wood cement boards, wood chips, wood scraps and wood wool are processed in a calcium chloride solvent, and then mixed with cement. This is then placed in a mold and compression molding is performed. This allows the material to be formed in thick boards, hollow blocks and the like, and also has the advantages of being a good sound insulator, heat insulator and fire insulator.

Thus, the raw materials for the composition boards described above come from material that would generally have been burned or disposed of as waste, such as miscellaneous small trees, wood scraps, waste wood, and defective wood. These materials are broken into fine pieces and used as fibers or flakes. Waste product from plants of various kinds as well as everyday waste products are also used as raw material. Thus, in composition boards the natural resource of wood is used efficiently, and different kinds of waste products are also recycled into a useful product. Therefore it is expected that composition boards will continue to have increasingly wide usage.

However, while the composition boards described above can be widely used in furniture and structural material in construction, its lack of strength compared to regular composite boards makes it unsuitable for uses such as concrete panels, where an especially high degree of strength is necessary.

Furthermore, particle boards have inadequate resistance to peeling between particles. In order to use these in furniture, it is necessary for the material to have a specific gravity of at least 0.65 so that it can maintain adequate strength at the joins. This creates a limitation in production costs and compactness.

Composition board also has weak supporting strengths for regular wood screws, nails and tapping screws, thus requiring special screws and metal fasteners.

Composition board can also expand, deform and lose its shape significantly due to humidity or moisture. This makes it inappropriate for allocations that expose it to water.

Also, the production of wood boards involves the use of melamine-urea copolymer resin bonding agents. Formalin, which is one of the ingredients, remains as a residue from the production process and can be released into the air over a long period. This has been cited as a health hazard.

One method that has been proposed to overcome these drawbacks is to glue reinforcing material consisting of glass fiber mats or glass fiber sheets that have been saturated with a thermosetting resin. One example of this approach is described in DE-A-4110640.

However, because this kind of reinforcing material uses a resin that is thermosetting, attempts to increase strength by increasing the fiber content will result in deteriorated resin saturation. Furthermore, it is difficult to make the material thin. These factors put limitations on strength and lightness. Additionally, it is necessary to apply pressure and heat for a long period of time in order to attach the material to wood boards. This makes production difficult and also leads to alterations in the wood board from the heat and pressure.

As long as thermosetting resins are used, there is difficulty involved in preventing the warping that accompanies the compression that occurs during hardening.

The object of the invention is to overcome the drawbacks of the prior art described above.

Embodiments of the invention desirably provide a high-strength composite board that is based on a wood board that saves precious lumber resources, that prevents water absorption from decreasing expansion, that improves the holding strength of wood screws, and that has mechanical properties that are superior to prior art boards such as lightness, strength, rigidity, and lifespan. Embodiments of the invention may also have a lower emission of formalin, thus making them safer.

According to the present invention there is provided a composite board comprising:
a reinforcing plate comprising a plurality of layers of glass fiber-reinforced thermoplastic resin joined to a wood board wherein:
   long continuos fibers are arranged in a single direction within each layer of said glass fiber-reinforced thermoplastic resin, different layers having different fiber alignments, and the thermal expansion coefficient of each layer, in the direction of the fibers in that layer being 10⁻⁵/°C or lower; and the ratio by weight of said long continuous fibers is between 40 percent and 80 percent of the fibre-reinforced resin;
   the thermoplastic resin contained in said reinforcing plate is saturated to a depth of between 0.1mm and 1mm into a surface of said wood board to which said reinforcing plate is attached; and
   said wood board is a particle board, a fiber board, wood cement board, or a composite board containing wooden scraps and fiber on which is applied a bonding agent.

Boards containing wooden scraps and fiber include boards made by mixing, pressurizing and molding wood scraps and wood fiber combined with a bonding agent and small particles from various waste products.

In the composite board of the invention, the surface of the wood board to which the reinforcing plate will be joined is saturated to a depth of 0.1-1 mm with the same thermoplastic resin that is saturated in the reinforcing plate. The reinforcing plate may then be glued to the resin-saturated layer. Also it, would be desirable to mix in short fibers with the resin-saturated layer.

The reinforcing plate is made by stacking a plurality of single layers (prepreg sheets) so that the fibers are oriented in different directions. It would be desirable to have been two and four layers of prepreg.

It would also be possible to stack a thermoplate resin plate, made from the same resin used in the reinforcing plate, on the surface or an inner layer of the reinforcing plate.

It would also be desirable to cover not only the side surfaces but also the ends of the wood board with reinforming plates.

Furthermore, in another embodiment, a layer comprising an embossed surface sheet, a decorative material or the like is attached to the surface, and then a protective resin film is attached on top of that. The protective film may be temporarily attached.

It would be desirable to use a polyolefin resin or a polystyrene resin as the resin in the reinforcing plate.

The above, and other objects features and advantages of the present invention will become apparent from the description read in conjunction with the accompanying drawings, in which like reference numerals designate the same elements. Embodiments of the invention are illustrated by way of example only with reference to the drawings of which:
Fig. 1 is a perspective drawing showing an embodiment of the high-strength composite board of the present invention.
Fig. 2 is a perspective drawing showing the high-strength composite board of Fig. 1 formed with a bend.
Fig. 3 is a perspective drawing showing a different embodiment of the present invention.
Fig. 4 is a cross-section drawing showing a high-strength composite board having a surface material on its surfaces.
Fig. 5 is an enlarged cross-section drawing of a wood board having a resin-saturated layer, wherein the same thermoplastic resin used in the reinforcing plate is saturated on a surface of the wood board.
Fig. 6 is an enlarged cross-section drawing of the wood board shown in Fig. 5 wherein short fibers are mixed into the resin saturated layer.
Fig.7 is a drawing for the purpose of describing a device for making the high-strength composite board of the present invention.

In these drawings, the thickness is exaggerated relative to the surface dimensions in order to indicate the derails of the cross-section configuration.

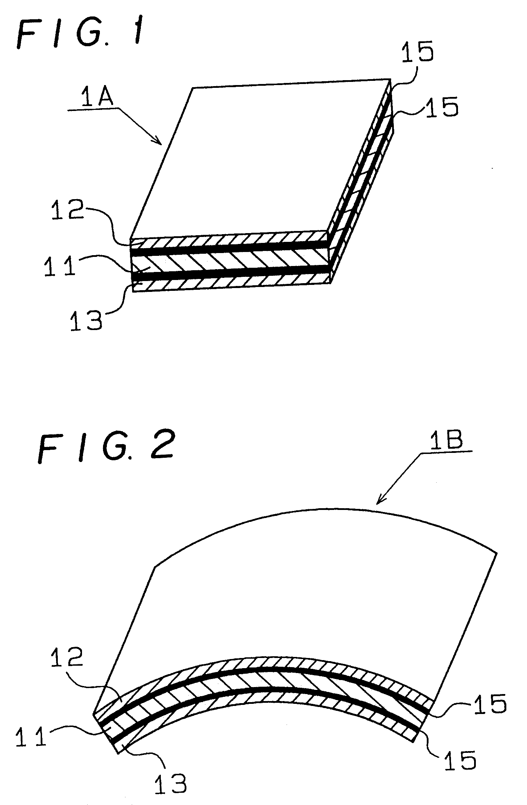

Referring to Fig. 1, there is shown a flat high-strength composite board 1A appropriate for use in concrete frames and the like. Reinforcing plates 12, 13 are attached integrally to the front and back sides of wood board 11 through thermal adhesion. A resin-saturated layer on the surface of wood board 11 is formed by saturating the thermoplastic resin used in reinforcing plates 12, 13.

Reinforcing plates 12, 13 comprise a stack of prepreg sheets. The prepreg sheets are made by arranging long continuous fibers in one direction and mixing thermoplastic resin so that the weight ratio to the fibers is between 40 percent and 80 percent. It would be desirable to have between two and four sheets stacked so that the orientation of the fibers are different.

Heat is applied in order to attach wood board 11 and reinforcing plates 12, 13. The minimum temperature for this is the melting point of the thermoplastic resin saturated in the reinforcing plates. While the resin is molten the plates are put on wood board 11. The pieces are joined by cooling at a pressure of 3 kg/cm² or less using a press.

During this procedure, the molten thermoplastic resin penetrates through the surface into the spaces between wood particles or the like, and surrounds the wood particles. This forms a resin-saturated layer 15. When the resin cools off and becomes solid, wood board 11 and reinforcing plates 12, 13 form a firm bond via resin-saturated layer 15.

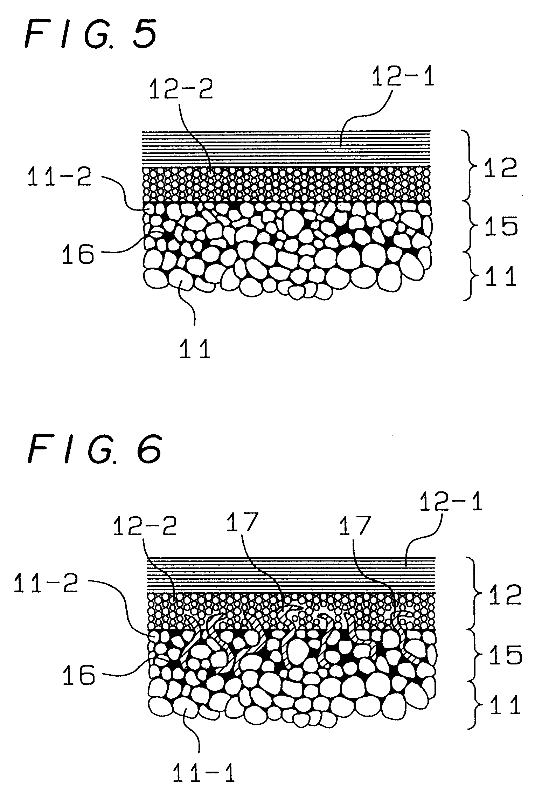

Referring to Fig. 5, there is shown details of the resin-saturated layer. Referring to the drawing, there is shown large particles 11-1, which make up the core section of wood board 11. Smaller particles 11-2 are present at the surface layer. Reinforcing plate 12 comprises a prepreg 12-1 and a prepreg 12-2, which are stacked so that their fiber orientations are perpendicular to each other. Thermoplastic resin 16 is resin that has penetrated into wood board 11 from reinforcing plate 12.

In this way, thermoplastic resin fills up the spaces between the fibers distributed in reinforcing plate 12, and at the same time, fills up the spaces between the particles that make up wood board 11, thus making them integral. This results in a strong bond between wood board 11 and reinforcing plate 12, 13.

It would be desirable for the thickness of resin--saturated layer 15, i.e. the saturation depth of the resin, to be between 0.1 mm and 1 mm. In cases when resin-saturated layer 15 is not adequately formed or when the saturation depth is 0.1 mm or less, the bonding strength decreases significantly. On the other hand, it is difficult to have a depth greater than 1 mm, and a resin-saturated layer that is so thick would not increases bonding strength anyway.

Referring to Fig. 6, a plurality of short fibers 17 is distributed at the surface of wood board 11. This results in an even greater bonding strength because short fibers 17 become entangled with the glass fibers in reinforcing plate 12.

Before bonding reinforcing plate 12, it would be desirable to preheat wood board 11 to a temperature high enough to allow the thermoplastic resin to flow. This is so that the flowing resin can effectively fill the spaces in wood board 11, thus providing an adequate thickness for resin-saturated layer 15.

It would also be possible to cover the surface of wood board 11 or reinforcing plate 12 beforehand with a resin film made from the same resin used in reinforcing plate 12. When wood board 11 and reinforcing plate 12 are joined, the resin in the resin film melt and penetrates into the surface of wood board 11 well. This increases the thickness of resin-saturated layer 15 as well as the resin content, thus guaranteeing a reliable bond.

In this way, the formation of a resin-saturated layer 15 on the surface of wood board 11 allows a strong bond between the surfaces of wood board 11 and reinforcing plate 12 without requiring the use of a bonding agent. In addition, the exposed area of the wood is decreased, thus reducing formalin dissipation.

Referring to Fig. 2, there is shown an embodiment of the high-strength composite board of the present invention, in which there is a bent board 1b having an arcuate cross-section. In this embodiment, reinforcing plates 12, 13 are bonded to wood board 11, which has been bent. This embodiment is appropriate for curved concrete panels and the like.

When the vertical and horizontal dimensions of wood board 11 and reinforcing plate 12, 13 are identical, it is possible for reinforcing plates 12, 13 to be peeled off at the corners.

Referring to Fig. 8 in order to prevent this problem, it would be desirable to use a reinforcing plate 12 having vertical and horizontal dimensions that are somewhat smaller than those of wood board 11. In a high-strength composite board 1c configured in this manner, reinforcing plate 12 does not peel off from the corner of wood board 11, thus allowing easier handling.

Another way to prevent reinforcing plate 12 from being peeled off from the edges of wood board 11 would be to have reinforcing plate 12 be larger than wood board 11. The ends of reinforcing plate 12 would be bent over to cover wood board 11. With this configuration, the ends of wood board 11 would be covered by reinforcing plate 12, thus increasing the overall strength of the composite board as well as increasing the local strength at the corners. This prevents reinforcing plate 12 from being peeled off.

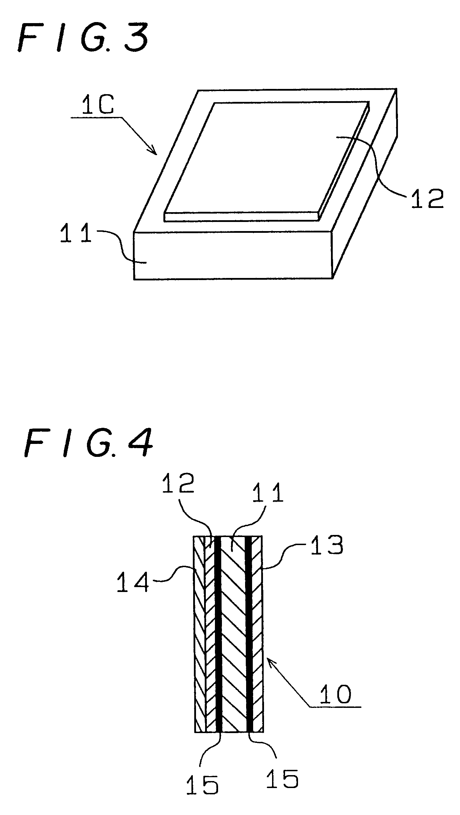

Referring to FIg. 4, there is shown a composite board 10. Reinforcing plates 12 and 13 are bonded to the front and back of wood board 11. A surface material 14 is attached to the surface of front reinforcing plate 12.

When the board is to be used in concrete frames, surface material 14 improves the mold release characteristics relative to the concrete. It is possible to use a surface material that is smooth when the concrete is to be smooth or polished. It is also possible to use an embossed material in order to provide designs on the front of a building, thus increasing its aesthetic qualities.

In the latter case, surface material 14 can be used to transfer various designs and patterns on to concrete, such as wood grain, marble, brushstrokes, line art, and the like.

For high-strength composite boards used in interior walls and partitions, surface material 14 can be paper prints of wood grain, thin wooden plates, and the like. For exterior use, a weather-resistant material would be used, such as a resin membrane or a metal foil.

Because the thin thermoplastic resin layer formed on the reinforcing plate is not especially attractive, it is possible to apply a bonding agent to this surface and attach a decorative surface material to the surface. However, the bonding agent may not be able to form an effective bond, preventing an adequate bonding strength. In such a case, obtaining an adequate bonding strength may require processing of the reinforcing plate surface by sanding, corona discharge treatment, chemical etching and the like. These types of processing considerably increases production costs.

In order to overcome this problem, it is possible to attach a porous sheet, such as thick paper or non-woven cloth, onto the reinforcing plate beforehand. Because the bonding agent can penetrate effectively into this porous sheet, some of the thermoplastic resin in the reinforcing plate penetrate into the porous sheet when the decorative surface material is attached to the reinforcing plate. This results in a resin-saturated layer, similar to the one described previously, which provides a strong bond between the reinforcing plate and the decorative material.

In this case as well, it would be desirable to cover the ends of the composite board with surface material 14 in order to prevent surface material 14 from peeling off at the ends.

The following is a description of the materials used in each of the parts of the invention.

The thermoplastic resin used in the reinforcing plate is not particularly specified. For example, the following can be used: polystyrene, polyvinyl chloride, straight-chain low-density polyethylene, low-density polyethylene, high-density polyethylene, polypropylene, polycarbonate, polybutylene terephthalate, polyethylene terephthalate, polyether sulfone, polysulfone, polyethyl imide (trade name: ULTEM), polyether ether ketone, polyphenylene sulfide, and the like. However, in terms of strenyth, wear-resistance, price, and recyclability after disposal, the optimal resin would be the generally used polyolefin resins and the polystyrene resins such as polyethylene and polypropylene.

The long continuous fibers are mixed at a ratio of 40-80 percent by weight. It would be especially desirable to have a ratio of 45-70 percent by weight. If the ratio is less than 40 percent, the molding of the reinforcing plate become difficult because of the increased fluidity of the resin a high temperatures. In addition, it becomes difficult to obtain the rigidity and wear resistance required for a board. Also if the ratio goes beyond 80 percent, the adhesive properties decrease and shaping becomes difficult.

The continuous long fibers in the reinforcing plate are arranged in a single direction and in a direction that would generally receive bending stress darting use.

It would also be possible to have a stack of layers of these fibers comprising; a layer in which the fibers are oriented in a direction that would receive bending stress during use: and a layer in which the fibers are oriented perpendicular to this direction.

The prepreg layers used in the reinforcing plate can be made according to the method disclosed in Japanese Laid-open Patent Publication No. 2-42168.

In this method, monofilament glass fibers used for strengthening, are processed with a coupling agent, such as γ-methacryloxpropyl trimethoxy silane. A bundle of a plurality of yarns is pulled with a fixed tension and brought into contact with molten thermoplastic resin. Resin is penetrated inside the yarn while being put through a heated roller.

In the composite boards of the invention two or more layers of prepreg are stacked. However, when a reinforcing plate is attached to only one side of a wood board and the reinforcing plate is too thick, it is possible for the the composite board to warp.

Therefore, a single prepreg layer should be between 50 and 600 micrometers, and also, it would be desirable to keep the total thickness at 1 mm or less even when between 2 and 4 layers are stacked together.

The composite board can also warp, if the reinforcing plate has a large coefficient of thermal expansion. This is why the coefficient of thermal expansion is kept at 10⁻⁵/ °C or less.

Examples of material that can be used for the surface material include; foam or non-foam sheets such as polypropylene, polystyrene sheets; thermoplastic resin products such as PVC, PZT sheets; metal foil; paper; woven and non-woven cloths made from various fibers. When resin is to be used as the surface material, it would be desirable to use the same type of resin as is used in the reinforcing plate.

The following is a description of the procedure used in bonding the wood board and the reinforcing plate.

In general, the procedure involves heating the reinforcing plates comprising continuous long fibers and thermoplastic resin to a temperature at or above the melting point of the thermoplastic resin. They are then placed on the front and back sides of the wood board. Pressure is applied through a press roller, and the board is shaped. A surface material is bonded to the surface, if necessary.

Another method provides a more reliable bond using thermal bonding. Both the reinforcing plate and the wood board is heated to a temperature around the melting point of the resin in the reinforcing plate. Then the reinforcing plate and the wood board and put together. A press that is heated between room temperature and 80 °C is used to apply pressure between 0.1 kg/cm² and 3 kg/cm².

It is necessary to eliminate any air that is present between the prepreg layers in the reinforcing plate, but if bonding is done under the above conditions, air is usually eliminated naturally. Also, the wood board will not be damaged if the pressure is within the range described above. Also, of course, there is no problem with using a reinforcing plate that has had air eliminated beforehand and that has been cooled.

It is possible to heat the reinforcing plate and the wood board separately without having them be in contact with each other. It is also possible to have the reinforcing plate placed above the wood board so that they are heated simultaneously.

Referring to Fog. 6, it would be desirable to distribute short fibers on the surface layer of the wood board in order to obtain good bonding strength. It would also be effective, however, to form a thermoplastic resin layer containing short fibers between the wood board and the reinforcing plate, thus having the short fibers connecting the two during bonding.

The short fibers used here a length of between 0.1 mm and 100 mm.

If the length is less than 0.1 mm, linkage becomes impossible. Increasing the length past 100 mm does not result in improved linkage. The desirable length for the short fibers is between 0.5 mm and 20 mm.

The short fibers can be, for example, polyolefin resin fibers, polyester resin fibers, glass fibers, non-woven cloth and the like.

A thermoplastic resin layer containing these layers is formed so that it uniformly covers the surface of the wood board. It would also be possible to cover the surface of the wood board with chopped thermoplastic resin containing glass fibers.

When the thermoplastic resin is heated to the melting point or above, it generally melts into a fluid state. However, in composite material containing 40 percent by weight or more of fibers, the resin is prevented from flowing freely within the fiber lattice. When pressure is applied for shaping, the overall shape is kept uniform as a result of the fiber structure, even if the fiber structure is changed. Thus, resin is prevented from leaking out and a high quality, precise shape is obtained.

The reinforcing plate and the wood board must be made integral while the thermoplastic resin in the reinforcing plate is in a molten state. It is therefore necessary to have a device that can go from the heating step to the cooling and integration step in a short period of time.

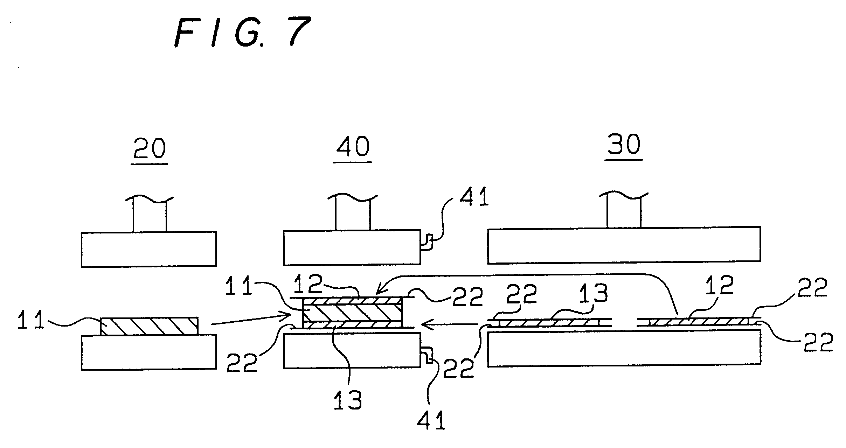

Referring to Fig. 7, there is shown as example of such a device for making high-strength composite boards.

The device comprises: a hot press 20 for preheating the wood board; a hot press 30 for preheating the reinforcing plate; and a joining press 40 for cooling and bonding.

Wood board 11, produced by a press for making wood boards (not shown in the drawings), is heated by wood board preheating hot press 20 so that at least its surface has a temperature around the melting point of the thermoplastic resin used in reinforcing plates 12, 13. Similarly, reinforcing plates 12, 13, produced by a press for making reinforcing plates(not shown in the drawings), is heated by reinforcing plate preheating hot press 30 to a temperature at or higher than the melting point of the thermoplastic resin used in its production. Reinforcing plates 12 and 13 are protected on both sides by removable sheets 22.

Removable sheet 22 on the upper surface of reinforcing plate 12 is removed by a device not shown in the drawings. Then the plate is placed on the die of joining press 40 by a conveyor device not shown in the drawings.

Then, wood board 11 is placed on the plate by a conveyor device not shown in the drawings. A different conveyor device not shown in the drawings carries reinforcing plate 13 to joining press 40. While it is being carried, removable sheet 22 on the lower surface of the plate is removed, and then the plate is placed on wood board 11.

THe punch of the joining press descends and applied pressure on reinforcing plates 12 and 13 as well as wood board 11 between them. The die and the punch of the joining press contain fluid channels 41 for the circulation of coolants. The die and punch are kept consistently at a temperature considerably lower than the melting point of the thermoplastic resin. This cools reinforcing plates 12 and 13 and wood board 11 between them. The thermoplastic resin and the high-strength composite board is completed.

The following is a description of the results from comparative rests performed in order to study the characteristics of the high-strength composite of the present invention. In the comparative tests below different combinations of wood boards and reinforcing plates were used. As described below, 35 test samples for the embodiments and 14 test samples for comparative examples were produced, and their physical properties, mechanical strengths, and the like were measured.

An outline of the tests is as follows.

The prepreg layers used in these test sample were all made according to the method disclosed in Japanese Laid-open Patent Publication No. 2-42168 described above.

The glass fibers used in the tests are monofilaments 13 micrometers thick and are processed with γ-methacyloxypropyltrimethoxy silane. 1,800 fibers are bundled into yarn having no twists. The yarn is pulled with a fixed tension and aligned in a single direction. The prepreg layer is formed by having resin penetrate into yarn using a heated roller rubbing resin in.

The prepreg layer is formed by having resin penetrate into the yarn using a heated roller rubbing resin in. Prepreg made in this way provide good adhesion between the thermoplastic resin and the fiber. The fiber content can be varied between 40 percent and 80 percent by weight as necessary, and the thickness can be between 0.01 mm and 1 mm. The reinforcing plates can be formed from a single prepreg layer, or then can be formed by stacking two prepreg layers so that the fiber orientations are perpendicular to each other.

Referring to Table 1, there is shown the configuration of prepreg sheets made for the embodiments of the present invention and the comparative embodiments. Prepregs A-C and E have fiber content of between 40 percent and 80 percent by weight, and relate to the present invention. Prepreg F and prepreg G are outside this range and are used in the tests as comparative embodiments.

**TABLE 1**

| CONFIGURATION OF PREPREGS | | | | | |
|---|---|---|---|---|---|
| Symbol | Fiber | Resin | Fiber Content (wt %) | Thickness (mm) | Weight per unit area (kg/m²) |
| A | Glass | Polypropylene | 50 | 0.20 | 0.3 |
| B | Glass | Polypropylene | 53 | 0.20 | 0.3 |
| C | Glass | Polypropylene | 85 | 0.20 | 0.3 |
| E | Glass | Polyethylene | 50 | 0.20 | 0.3 |
| F | Glass | Polypropylene | 28 | 0.20 | 0.3 |
| G | Glass | Polypropylene | 90 | 0.20 | 0.3 |

The tests used particle board, and fiber board as the wood boards. Referring to Table 2, there is shown descriptions of the wood boards used.

Each of the wood boards were cut into 500 mm square prepregs having a length of 500 mm and width 500 mm were cut out in pairs. The reinforcing plates were formed by bonding together two prepregs in a pair so that their fiber orientations were perpendicular.

**TABLE 2**

| CONFIGURATION OF WOOD BOARDS | | | |
|---|---|---|---|
| Symbol | Configuration | Specific Gravity | Thickness (mm) |
| PN | Triple-layered particle board | - | 12 |
| PO | Triple-layered particle board | - | 8 |
| FN | Medium-fiber board | 0.6 | 12 |
| FO | Medium-fiber board | 0.5 | 9 |
| FP | Soft-fiber board | 0.3 | 12 |

Referring to Fig. 7, there is shown a device for making high-strength composite boards. The die and the punch of hot press 20, hot press 30 and joining press 40 are heated to 100°C , 200 °C and 70 °C lespectively.

Pressure is applied from hot press 20 at 3 kg/cm² for two minutes.

At hot press 30, the reinforcing plates are covered on both sides with a peeling film 22. A pressure of 0.1 kg/cm² is while the plates are preheated for two minutes.

Pressure is applied from joining press 40 for one minute at 1 kg/cm².

The structure and materials of the test sample used are as shown in table 3.

Excluding the following conditions and those shown in the table, all the embodiments were made in the same manner as embodiment 1.

**Table 3**

| CONFIGURATIONS & MATERIAL OF COMPOSITE BOARDS | | | | | |
|---|---|---|---|---|---|
| Embodiment No. | Wood board symbol | Prepreg | Reinforcement Place | Resin-saturated Layer (mm) | Notes |
| 1 | PIN | A+ 2 layers | Both sides | 0.4 | |
| 2 | PN | B+ 2 layers | Both sides | 0.2 | |
| 3 | PN | C+ 2 layers | Both sides | 0.1 | |
| 5 | PN | E+ 2 layers | Both sides | 0.3 | |
| 6 | PO | A+ 2 layers | Both sides | 0.4 | |
| 9 | PO | A+ 2 layers | Both sides | 0.4 | 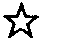 |
| 10 | PO | A+ 2 layers | Both sides | 1 | 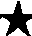 |
| 11 | PO | A+ 2 layers | Both sides | 0.4 | 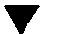 |
| 12 | FN | A+ 2 layers | Both sides | 0.4 | |
| 13 | FN | B+ 2 layers | Both sides | 0.2 | |
| 14 | FN | C+ 2 layers | Both sides | 0.1 | |
| 16 | FN | E+ 2 layers | Both sides | 0.3 | |
| 17 | FO | A+ 2 layers | Both sides | 0.4 | |
| 18 | FP | A+ 2 layers | Both sides | 0.4 | |
| 21 | FN | A+ 2 layers | Both sides | 0.4 | 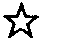 |
| 22 | FN | A+ 2 layers | Both sides | 0.8 | 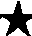 |
| 23 | FN | A+ 2 layers | Both sides | 0.2 | ▲ |

A "+ " symbol in the prepreg column indicates that two layers of prepreg having perpendicular fiber orientations were used.

In embodiments 9, and 21 (indicated with a white star mark 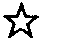 in the notes column), a removable sheet from one of the reinforcing plates is peeled off during the joining process at the joining press, and a 0.2 mm thick non-woven cloth made from polyethylene terephthalate is attached as surface material. And after joining, a bonding agent is applied to the surface of the non-woven cloth, and a thin walnut plate 0.2 mm thick is attached.

In embodiments 10, and 22 (a black star mark 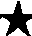 in the notes column), during the joining process at the joining press, a non-stretching polypropylene resin film 100 micrometers thick is interposed between the reinforcing plates and the front and back sides of the wood board.

In embodiment 11 (an upside-down triangle mark ∇ in the notes column), during the joining process at the joining press, a non-woven cloth 0.5 mm thick made from glass fiber 17 micrometers thick is interposed between the reinforcing plates and the front and back sides of the wood board.

In embodiment 23 (a triangle mark △ in the notes column), during the joining process at the joining press, a non-woven cloth made from polyethylene terephthalate 0.2 mm thick is interposed between the reinforcing plates and the front and back sides of the wood board.

Referring to Table 4, the test samples shown in the table were made in order to make comparisons with the above embodiments.

In the following comparative samples, the ones in which a composite board was made by attaching reinforcing plates were made under the same conditions as embodiments 1, and 12 above, except for the different fiber contents of the reinforcing plates. These comparative samples were cut in the same dimensions as the embodiments above, i.e. 500mm squares, and were tested under the same conditions as the embodiments.

**TABLE 4**

| CONFIGURATION & MATERIALS OF BOARDS OF COMPARATIVE EMBODIMENTS | | | | | |
|---|---|---|---|---|---|
| No. | Wood Board Symbol | Prepreg | Reinforcing Plate | Resin-saturation Layer (mm) | Notes |
| 1 | PN | F+ 2 layers | Both sides | 0.5 | |
| 2 | PN | G+ 2 layers | Both sides | < 0.1 | |
| 3 | PN | not used | | | board only |
| 4 | PO | not used | | | board only |
| 5 | FN | F+ 2 layers | Both sides | 0.5 | |
| 6 | FN | G+ 2 layers | Both sides | < 0.1 | |
| 7 | FN | not used | | | board only |
| 8 | FO | not used | | | board only |
| 9 | FP | not used | | | board only |

The tests that were performed were as follows.

Test for bending properties: JIS A5908. Measurement of bending strength and bending elasticity.

Breaking load: performed only for samples comprising plywood only.

Water absorption test: JIS A5908. After 24 hours of immersion in water, the water absorption rate, the change in dimensions due to moisture absorption and the change in thickness due to moisture absorption are measured.

Wood screw holding strength: JIS A5908. Performed on embodiments 1 to 11 and comparative embodiments 1 to 4.

Formalin test: Comparison using embodiments 1, and 12 and the wood boards used in these embodiments.

Peeling test: Test to observe if peeling occurs or not at the bonding surface between the wood board and the reinforcing plate.

Referring to Table 5, there is shown the results from tests of composite boards in which particle boards were used as the wood boards.

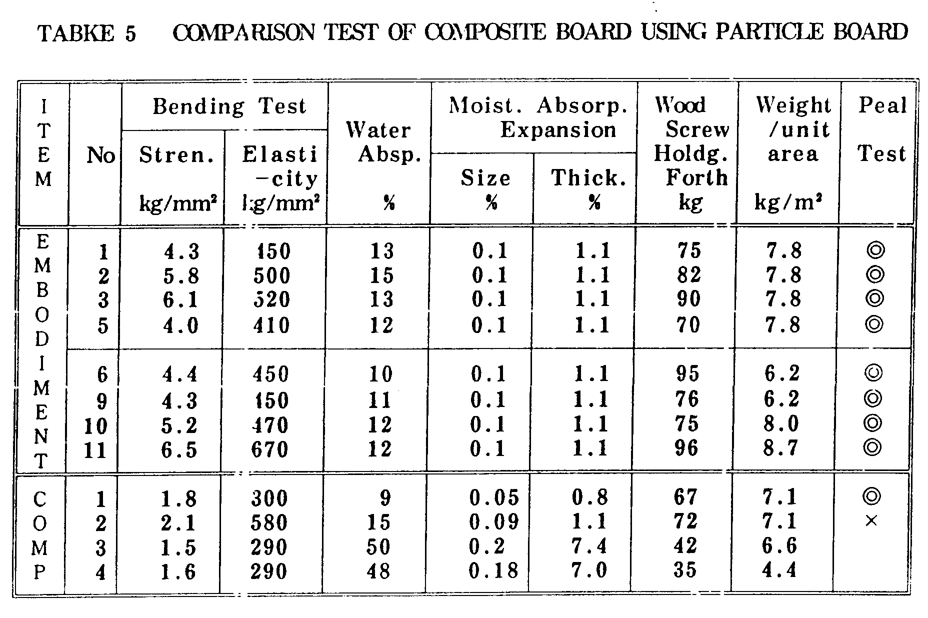

A double circle mark ⓞ in the peeling test column indicates that there was no peeling at the thermal adhesion layer, and that there was internal breakage in the wood board. A cross mark X indicates that there was peeling at the thermal adhesion layer.

Referring to the table, when particle boards is used as the wood board, the high strength composite board of the present invention has a bending strength three to four times that of particle board. Bending elasticity is stronger by a factor of 1.5 to 2. When reinforcing plates are arranged on both sides, water absorption decreases 1/3 to 1/5, expansion due to moisture absorption decreases by half, and expansion of thickness is less than 1/6. Also, wood screw holding strength increases by about a factor of two.

The results also show that when the fiber content of the reinforcing plate is 40 percent or less (comparative embodiment 1), the increase in strength is not very good. Conversely, if it is 80 percent (comparative embodiment 2), it leads to bad results in the peeling test.

It should be noted that there was particular improvement in strength in embodiment 11, which used non-woven glass cloth between the reinforcing plates and the wood board.

The tests in which fiber board was used as the wood board were conducted in the same manner as the above particle beard tests except for the omission of the wood screw holding strength tests.

Referring to Table 6, there is shown the results of the tests for the composite boards using fiber board.

Referring to the table, it can be seen that when medium-fiber board is used, the results are similar to those when particle board is used.

Thus, the high-strength composite board of the present invention has a bending strength three to four times that of fiber board. Bending elasticity is stronger by a factor of 1.5 to 2. When reinforcing plates are arranged on both sides, water absorption decreases 1/3 to 1/5, expansion due to moisture absorption decreases by half, and expansion of thickness is less than 1/6.

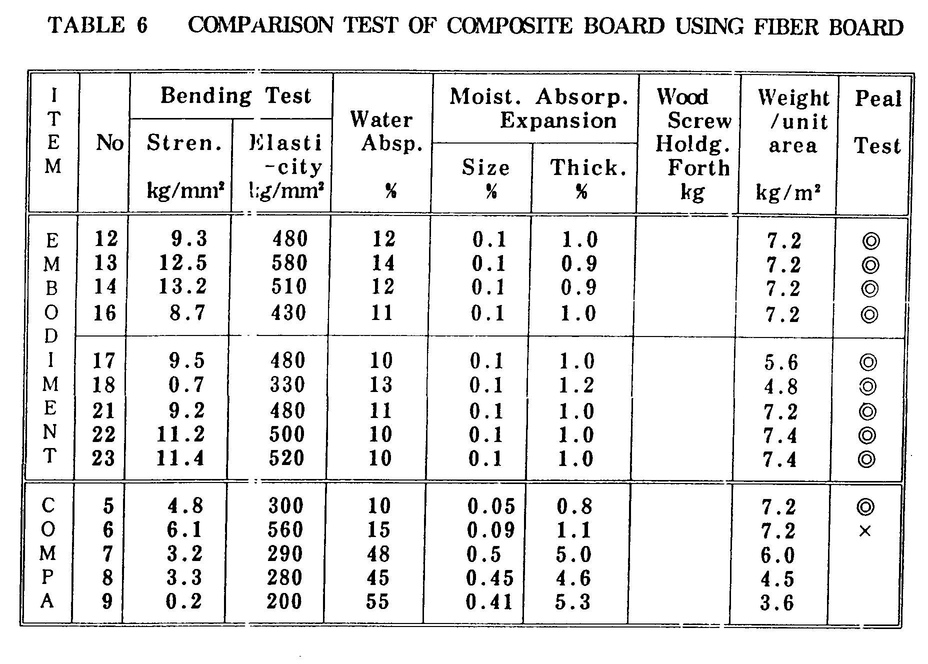

Even with embodiment 18, which uses soft-fiber boards, a comparison between it and the properties of the board (comparative embodiment 9) shows that the test results are significantly superior.

As in the cases where particle board was used, the results show that when the fiber content of the reinforcing plate is 40 percent or less(comparative embodiment 5), the increase in strength is not very good. Conversely if it is 80 percent (comparative embodiment 6), it leads to bad results in the peeling test.

In these tests it was shown the there was significant improvement in strength in embodiment 15, which used carbon fibers in the reinforcing plates.

Referring to Table 8, there is shown the results of measuring the amount of formalin residue in the high-strength composite boards of embodiments 1, and 12, and the wood boards used in these.

Referring to the table, it can be seen that the composite boards had approximately half the amount of residue formalin compared the the wood boards.

**TABLE 8**

| RESULTS OF FORMALIN COMPARISON TEST | | | |
|---|---|---|---|
| Item | Wood board | Prepreg | Formalin ppm |
| Embodiment 1 | PN | A+ 2 layers | 3.4 |
| Comp. Embodiment 1 | PN | None | 6.5 |
| Embodiment 12 | FN | A+ 2 layers | 2.8 |
| Comp. Embodiment 7 | FN | None | 6.2 |

Having described preferred embodiments of the invention with reference to the accompanying drawings, it is to be understood that the invention is not limited to those precise embodiments, and that various changes and modifications may be effected therein by one skilled in the art without departing from the scope of the invention as defined in the appended claims.

Compared to prior art boards, the high-quality and high-strength wood board of the present invention is lighter, allows easier on-site handling, requires fewer raw materials, and higher compressive strength. A stack of prepreg layers, made from fiber-reinforced synthetic resin having extremely high rigidity and tensile strength, is formed at least one side of the wood board. Thus, the board has a very high overall rigidity, and its use can result in an extremely solid construction.

Also, with the method of the present invention, it is possible to provide a large quantity of cheap, high-quality and high-strength wood boards that have superior water and corrosion resistance and that have minimal changes if, dimension due to moisture absorption.

## Claims

1. A composite board comprising:
a reinforcing plate comprising a plurality of layers of glass fiber-reinforced thermoplastic resin joined to a wood board wherein:
long continuos fibers are arranged in a single direction within each layer of said glass fiber-reinforced thermoplastic resin, different layers having different fiber alignments, and the thermal expansion coefficient of each layer, in the direction of the fibers in that layer being 10⁻⁵/°C or lower; and the ratio by weight of said long continuous fibers is between 40 percent and 80 percent of the fiber-reinforced resin;
the thermoplastic resin contained in said reinforcing plate is saturated to a depth of between 0.1mm and 1mm into a surface of said wood board to which said reinforcing plate is attached; and
said wood board is a particle board, a fiber board, wood cement board, or a composite board containing wooden scraps and fiber on which is applied a bonding agent.

2. A composite board according to claim 1 wherein said resin-saturated layer on a surface of said wood board contains short fibers

3. A composite according to claim 1 or claim 2 wherein:
said plurality of layers of said reinforcing plate comprises between two and four layers.

4. A composite board according to any one of the preceding claims wherein:
at least one reinforcing plate is larger in size than said wood board; and the ends of said wood board are covered by the surplus area of said reinforcing plate or plates.

5. A composite board according to any one of the preceding claims wherein:
at least one of the surfaces has a surface material.

6. A composite board according to claim 5 wherein:
said surface material is larger in size than said composite board; and the ends of said composite board are covered by the surplus area of said surface material.

7. A composite board according to any one of the preceding claims wherein:
a protective resin film is attached to at least one of the surfaces.

## Patentansprüche

1. Verbundplatte, umfassend:
eine Verstärkungsplatte, die eine Vielzahl von Schichten aus glasfaserverstärktem thermoplastischem Harz umfaßt und mit einer Holzplatte verbunden ist, worin:
lange kontinuierliche Fasern in einer einzigen Richtung innerhalb jeder Schicht des glasfaserverstärkten thermoplastischen Harzes angeordnet sind, wobei verschiedene Schichten verschiedene Faserausrichtungen aufweisen, und der Wärmeaus dehnungskoeffizient einer jeden Schicht in Richtung der Fasern in dieser Schicht 10⁻⁵/°C oder weniger ausmacht; und der Gewichtsanteil der langen kontinuierlichen Fasern zwischen 40 % und 80 % des faserverstärkten Harzes ausmacht;
eine Oberfläche der Holzplatte, an der die Verstärkungsplatte befestigt ist, bis zu einer Tiefe zwischen 0,1 mm und 1 mm mit dem in der Verstärkungsplatte enthaltenen thermoplastischen Harz gesättigt ist; und
die Holzplatte eine Spanplatte, eine Faserplatte, eine Holzzementplatte oder eine Verbundplatte ist, die Holzabfälle und Fasern enthält, auf die ein Klebstoff aufgetragen
ist.

2. Verbundplatte nach Anspruch 1, worin die harzgesättigte Schicht auf einer Oberfläche der Holzplatte kurze Fasern enthält

3. Verbundplatte nach Anspruch 1 oder 2, worin die Vielzahl von Schichten der Verstärkungsplatte zwischen zwei und vier Schichten umfaßt.

4. Verbundplatte nach einem der vorangegangenen Ansprüche, worin:
zumindest eine Verstärkungsplatte größer ist als die Holzplatte; und die Enden der Holzplatte von der zusätzlichen Fläche der Verstärkungsplatte oder -platten bedeckt sind.

5. Verbundplatte nach einem der vorangegangenen Ansprüche, worin:
auf zumindest einer der Oberflächen ein Oberflächenmaterial angeordnet ist.

6. Verbundplatte nach Anspruch 5, worin:
das Oberflächenmaterial größer ist als die Verbundplatte; und die Enden der Verbundplatte von der zusätzlichen Fläche des Oberflächenmaterials bedeckt sind.

7. Verbundplatte nach einem der vorangegangenen Ansprüche, worin ein Schutzharzfilm an zumindest einer der Oberflächen angebracht ist.

## Revendications

1. Panneau composite comprenant
une plaque de renforcement comprenant un certain nombre de couches d'une résine thermoplastique renforcée de fibres de verre jointes à un panneau de bois où :
de longues fibres continues sont agencées dans une seule direction dans chaque couche de ladite résine thermoplastique renforcée de fibres de verre, les différentes couches ayant différents alignements des fibres et le coefficient de dilatation thermique de chaque couche, dans la direction des fibres dans cette couche, étant de 10⁻⁵/°C ou moins; et le rapport en poids desdites fibres longues continues est compris entre 40 pour cent et 80 pour cent de la résine renforcée de fibres;
la résine thermoplastique contenue dans ladite plaque de renforcement est saturée sur une profondeur comprise entre 0,1 mm et 1 mm dans une surface dudit panneau de bois à laquelle est attachée ladite plaque de renforcement; et
ledit panneau de bois est un panneau de particules, un panneau de fibres, un panneau de ciment de bois ou un panneau composite contenant des déchets de bois et de la fibre où est appliqué un agent de liaison.

2. Panneau composite selon la revendication 2 où ladite couche saturée de résine sur une surface dudit panneau de bois contient des fibres courtes.

3. Composite selon la revendication 1 ou la revendication 2 où :
lesdites couches de ladite plaque de renforcement comprennent entre deux et quatre couches.

4. Panneau composite selon l'une quelconque des revendications précédentes où :
au moins une plaque de renforcement est plus grande en dimensions que ledit panneau de bois; et les extrémités dudit panneau de bois sont couvertes d'une aire en surplus de ladite plaque de renforcement ou des plaques.

5. Panneau composite selon l'une quelconque des revendications précédentes où :
au moins l'une des surfaces a un matériau de surface.

6. Panneau composite selon la revendication 5 où :
ledit matériau de surface est de plus grande dimension que ledit panneau composite; et les extrémités dudit panneau composite sont couvertes par l'aire en surplus dudit matériau de surface.

7. Panneau composite selon l'une quelconque des revendications précédentes, ou :
un film de résine protectrice est attaché à au moins l'une des surfaces.
